# EUROPEAN PATENT SPECIFICATION

(11) **EP 0 739 007 B1**
(45) Date of publication and mention of the grant of the patent: **19.05.1999**
(21) Application number: 96302086.2
(22) Date of filing: 26.03.1996
(51) Int. Cl.: G11B 19/04, G11B 5/60, G11B 21/21, G11B 19/20, G11B 27/36, G11B 5/48

(54) **A disk drive apparatus and read error recovery process for a disk drive apparatus**
Plattenlaufwerk und Verfahren zur Behebung von Lesefehlern in einem Plattenlaufwerk
Unité de disque et procédé de recouvrement d'erreur de lecture pour unité de disque

(30) Priority: 20.04.1995 JP 94711/95; 21.09.1995 JP 242832/95
(43) Date of publication of application: 23.10.1996
(73) Proprietor: INTERNATIONAL BUSINESS MACHINES CORPORATION, Armonk, NY 10504 (US)
(72) Inventor: Nakamura, Takashi, Fujisawa-shi, Kanagawa-ken (JP); Yoneda, Isao, Yokohama-shi, Kanagawa (JP); Yokoe, Yuji, Yokohama-shi, Kanagawa-ken (JP); Tsuwako, Kazushi, Machida-shi, Tokyo (JP); Harako, Fujio, Fujisawa-shi, Kanagawa-ken (JP); Suda, Katsumi, Yamoto-shi Kanagawa-ken (JP); Nakajima, Michio, Sagamihara-shi, Kanagawa-ken (JP); Ogasawara, Kenji, Fujisawa-shi, Kanagawa-ken (JP)
(74) Representative: Horner, David Richard

(56) References cited:
- US-A- 4 635 139
- US-A- 4 669 011
- US-A- 5 233 482
- PATENT ABSTRACTS OF JAPAN vol. 17, no. 311 (P-1556), 14 June 1993 & JP-A-05 028472 (MATSUSHITA ELECTRIC IND CO), 5 February 1993,
- IBM TECHNICAL DISCLOSURE BULLETIN , vol. 34, no. 11, April 1992, pages 217-219, XP002017318

## Description

### Field of the invention

The present invention relates to a disk drive apparatus and, more specifically, to a disk drive apparatus and method for eliminating read errors on the disk surface caused by projections such as thermal asperities.

### Background of the Invention

A magnetic disk drive apparatus is an apparatus for recording and reading data on the surfaces of disks by changing magnetic field. A transducer head is positioned over a specific position on a disk track on which data is recorded, and reads or writes data on the track of the disk spinning at high speed. The head is slightly spaced from the disk surface and positioned over the specific track. Recently, a magnetoresistive (MR) head has been used as a transducer head. The output resistance of this head changes in response to changes in magnetic field. This resistance change is converted into a direct current voltage signal by applying a predetermined electric current to the MR device to achieve data reading.

A thermal asperity is a projection produced on a disk which prevents reading and writing of data on the disk. The thermal asperity may raise the temperature of the strip of a head locally by 100°C or more. This temperature rise is caused by a mechanical contact between a head area containing a MR stripe and a projection on the disk surface. Because a change in resistance of the MR head caused by a change in magnetic field on a magnetic media resulting from a normal read operation is less than one percent of the MR stripe's resistance, a signal change caused by a temperature rise may substantially exceed the resistance change caused by a normal read signal, preventing the normal read of data.

One prior approach to solve the thermal asperity problem with read data is, when a drastic signal change which is likely to be caused by a thermal asperity occurs, to make an appropriate modification to the read signal so that it can be used as normal read data. Another prior approach is to correct an erroneous read signal by using an appropriate error correction method such as an error correcting code (ECC) method. See, for example, IBM Technical Disclosure Bulletin, Vol.34, No.11, pp 217-219, April 1992, "Fast Offset Recovery for Thermal Asperity Data Recovery Procedure." However, these approaches have the disadvantages that additional hardware is required to be added externally or large burst errors unrecoverable by using ECCs cannot be corrected and eventually must be treated as unreadable hardware error. They do not provide an adequate solution to the thermal asperity problem.

US-A-4,669,011 detects asperities and dynamically retracts the transducer to a safe height.

Other prior art which detects asperities include US-A-4,635,139; US-A-5,233,482 and JP-A-5,028,472

US-A-4,635,139 is reflected by the preamble of claims 1 and 8.

It is an object of the present invention to provide an improved technique for solving the thermal asperity problem.

### Summary of the invention

Viewed from a first aspect, the present invention provides a disk drive apparatus arranged to rotate disk signal storage media and to read or write data on said disk by using a signal transducer head arranged to fly over said disk, said disk drive apparatus comprising: detection means for detecting a read error on a data recording surface of said disk caused by a projection on the surface; characterised in that the apparatus includes correction means for lowering the flying height of said signal transducer head so as to make an assembly of said signal transducer head hit the projection on said disk surface so as to break said projection, thereby facilitating recovery of the read error.

Viewed from a second aspect, the present invention provides a method of recovering read errors in a disk drive apparatus arranged to rotate disk signal storage media and to read or write data on said disk by using a signal transducer head arranged to fly over said disk, the method comprising the step: detecting a read error on a data recording surface of said disk caused by a projection on the surface; characterised in that the method also includes the step of decreasing the flying height of said signal transducer head so as to make an assembly of said signal transducer head hit the projection on said disk surface so as to break said projection, thereby facilitating recovery of the read error.

According to the present invention, when a drastic signal change which is caused by a thermal asperity is detected by the MR head for reading signals, or when a data read error occurs, the inventive disk drive apparatus lowers the flying height of the signal transducer head, for example, by changing disk rotation speed, and makes the surface of a head assembly hit a projection to scrub it away, and thus, as one of the data recovery operations, removes the basic cause of the thermal asperity.

Hence, the present invention provides a disk drive apparatus and method whereby, when a thermal asperity is encountered, the projection on the disk which causes the thermal asperity is eliminated to avoid a subsequent error caused by the thermal asperity, making it possible to resolve the earlier mentioned disadvantages of prior thermal asperity counter measures.

One embodiment of this invention employs a positive pressure signal transducer head which increases its flying height as disk rotation speed increases. This configuration of the invention lowers the flying height of the head by reducing the disk rotation speed from the normal speed in read or write operation, so that a surface known as the Air Bearing Surface (ABS) hits and scrubs a projection on the disk to remove the projection.

Another embodiment of this invention employs for a negative pressure signal transducer head which decreases its flying height as disk rotation speed increases. This configuration of the invention lowers the flying height of the head by increasing the disk rotation speed from the normal rotation speed in read or write operation, so that the ABS side strikes against and scrubs a projection on the disk to eliminate the projection.

In preferred embodiments a servo clock is supplied in accordance with a change of the disk rotation speed. In this configuration, a servo signal recorded on the disk is read while the disk rotation speed is changed, and thereby accurate position control is accomplished to remove a projection.

Furthermore, another embodiment of this invention is provided, in which a bimetal and a heating element are attached to a head suspension which is a mounting structure for a signal transducer head. In this configuration, when the heating element is heated, a bimetal is transformed to force the flying height of the signal transducer head to be lowered so as to scrub away a projection such as a thermal asperity.

### Brief Description of the Drawings

The present invention will be described further, by way of example only, with reference to preferred embodiments thereof as illustrated in the accompanying drawings, in which:
Figure 1 shows a disk drive apparatus according to preferred embodiments of the invention;
Figure 2 shows the operation of a disk drive apparatus according to preferred embodiments of the invention;
Figure 3 shows read signals in a disk drive apparatus of preferred embodiments;
Figure 4 is a flowchart showing a data recovery process according to a preferred embodiment of the invention;
Figure 5 is a block diagram showing a disk drive apparatus according to a preferred embodiment of the invention; and
Figure 6 shows a suspension structure according to a preferred embodiment.

### Description of Preferred Embodiments

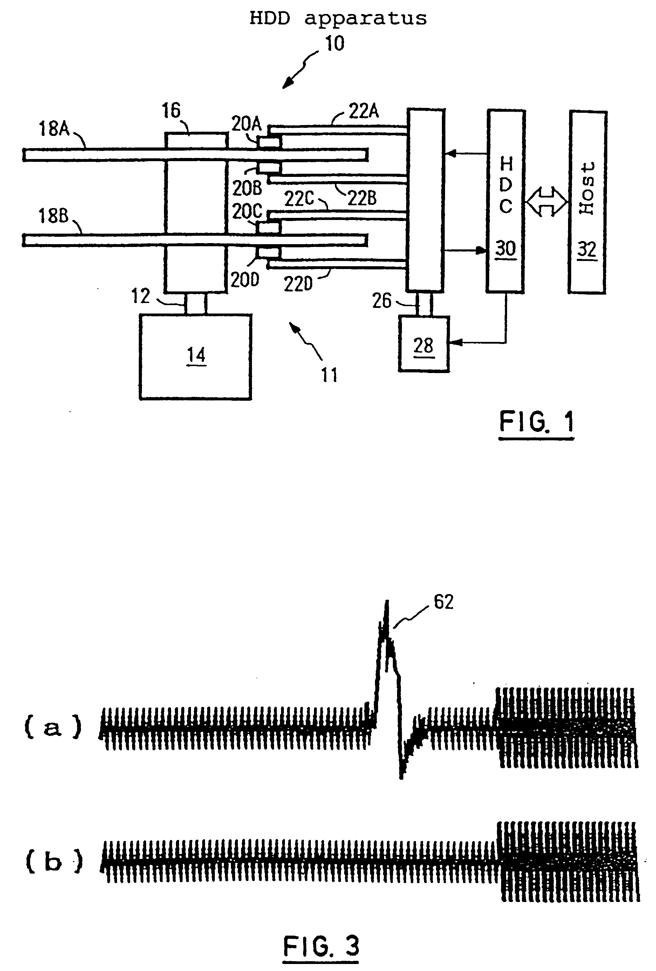

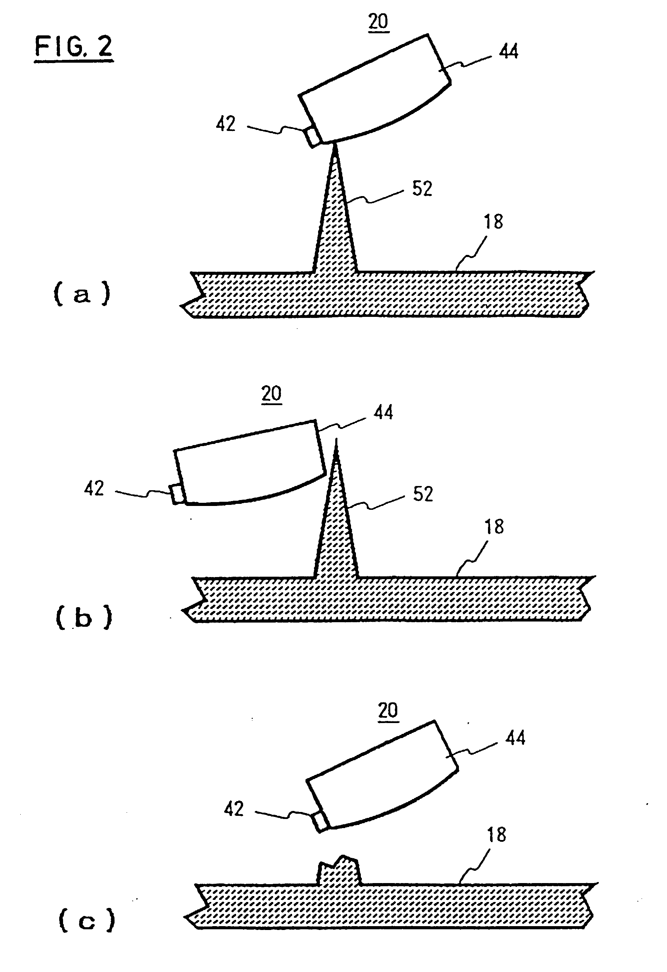

Figure 1 shows an example of a disk drive apparatus (HDD) to which this invention is applied. As shown in Figure 1, the disk drive apparatus 10 comprises a disk assembly 11 and hard disk controller (HDC) 30 including a local CPU. The disk assembly 11 comprises a disk drive 14 which rotates a shaft 12 at a high speed. A cylindrical support structure 16 is mounted on the shaft 12 in such a manner that they are concentric with each other. One or more data storage disks 18A, 18B are mounted on the outer surface of the supporting structure 16 at predetermined intervals. The disks 18A, 18B rotate together with the supporting structure 16 as if they are one unit when the shaft 12 is rotated by the disk drive 14.

Signal transducer heads 20A - 20D are held by access arms 22A - 22D and face a disk surface respectively. The access arms 22A - 22D are connected to a signal transducer head drive 28 through a shaft 26. The signal transducer heads 20A - 20D are placed over a desired position by rotation of the shaft 26. The disk drive 14 and signal transducer head drive 28 are connected to the HDC 30. The number of rotations and rotation speed of the shaft 26 are controlled by the HDC 30. The HDC 30 is connectable to a host 32.

Figure 2 schematically shows how a projection on a data recording surface of the disk is broken by contact with a positive pressure signal transducer head in the inventive disk drive apparatus. Figure 2 (a) shows the state in which a signal transducer head 20 equipped with a MR device 42 contacts with a projection 52 on the disk 18 during reading data on the disk 18. The signal transducer head 20 includes the MR device 42 and an ABS 44. The signal transducer head 20 is tilted to the direction of rotation by air pressure produced by the rotation of the disk. This tilt angle is called the "pitch angle." The pitch angle increases as the number of disk rotations increases. It decreases as the number of disk rotations, and therefore wind pressure, decreases. In Figure 2 (a), the closest-to-the-disk point of the ABS 44 of the signal transducer head 20 contacts with the projection 52.

When the signal transducer head 20 is brought into contact with the projection 52 as shown in Figure 2 (a), the temperature of the signal transducer head rises as described earlier, and consequently the resistance of the MR device, which is a read signal conversion device, changes and the read signal changes drastically. Figure 3 (a) shows this change in read signal. In Figure 3, the drastic change point 62 in the signal pattern that can be seen when the projection is detected is caused by the temperature change of the device and therefore ultimately by the projection. Such a projection, causing as described earlier a drastic change in temperature of the device, is called the thermal asperity. A read signal produced by a thermal asperity is distinct from normal data signal patterns. Therefore, if a steep read signal pattern which is likely to be caused by a thermal asperity is detected, a data recovery operation is performed.

Figure 2 (b) shows the positions of the disk 18 and signal transducer head 20 when the number of disk rotations are decreased by the inventive data recovery operation. The flying height of the signal transducer head 20 is lowered and comes closer to the disk 18. The pitch angle becomes smaller. That is, the head comes nearer to a position parallel to the disk. As a result, the ABS side of the signal transducer head 20 hits the projection 52. The strike breaks the projection 52 as shown in Figure 2 (c).

For example, assuming the disk rotation speed is 4870 rpm during read/write operation, a reduced rotation speed may be set to 2060 rpm. The head assembly is lowered until its closest point to the disk nearly contacts with the surface of the disk. Lowered height depends on the shape and weight of the head assembly. It is desirable that an appropriate level is selected accordingly. When the signal transducer head is lowered, it may remain in read mode or in off state. For example, approximately 100 msec after the rotation speed lowering is started, the disk is brought into a low speed state, kept at this speed for 2 to 3 seconds, then returned to the normal rotation speed. After returning to the normal rotation speed, the read operation is performed again and the removal of the error is checked.

The data recovery operation ends with the crushing of the projection, i.e., thermal asperity, and the disk is returned to its normal rotation speed. When the disk returns to the normal rotation speed, the flying height of the head increases. Figure 3 (b) shows the read signal record after the data recovery operation. The steep signal change observed in Figure 3 (a) is eliminated, indicating that the projection (thermal asperity) has been removed.

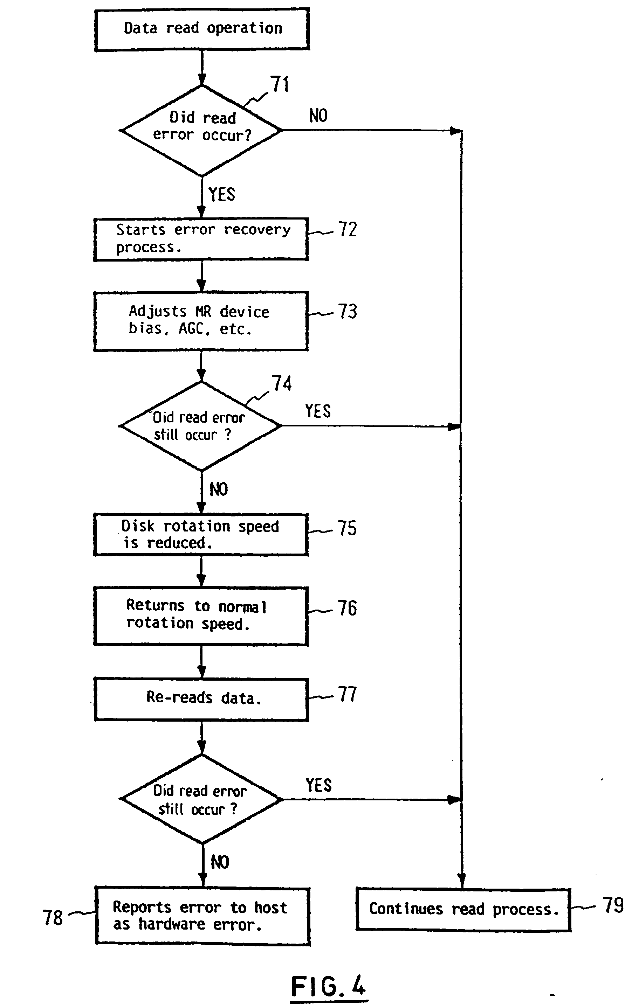

The inventive data recovery operation for removing a projection (thermal asperity) is described below with reference to a flowchart. Figure 4 shows the process flow of the error recovery when a data read error occurs. After a read error is detected at step 71, the data error recovery process starts at step 72. At step 73, conventional error recovery processes, for example, bias current change of the MR device, AGC gain adjustment, or some other error recovery processes are performed. After the error recovery processes, the data is re-read and if the data is read successfully, the operation exits the error recovery process routine (step 74) to return to the normal data read operation (step 79).

If the error is not corrected by these conventional steps, the flying height of the signal transducer head is changed by changing the disk rotation speed in accordance with the preferred embodiment of the invention. At step 75, the disk speed is reduced, for example from 4870 rpm to 2060 rpm as mentioned above. After a predetermined period of time, for example, 2 to 3 seconds, the normal rotation speed is returned (step 76). Then, at step 77, the data is re-read and if the data is read successfully, the error recovery process ends to return to the normal read operation (step 79). If the data read still fails, the error is reported as a non-recovered error to the host (step 78) and an appropriate action such as data write to an alternative area is performed. The flowchart indicates the operation for a positive pressure signal transducer head, that is, where the flying height decreases as the disk rotation speed decreases. For a negative pressure signal transducer head, the disk rotation speed is increased. The order of error recovery procedures is not limited to the order in this flowchart. A recovery process for an error cause which occurs most frequently may be performed first.

An apparatus and method of another embodiment of this invention are described below, which use a servo signal recorded on a disk to control the position of a signal transducer head so as to scrub and remove a projection such as a thermal asperity.

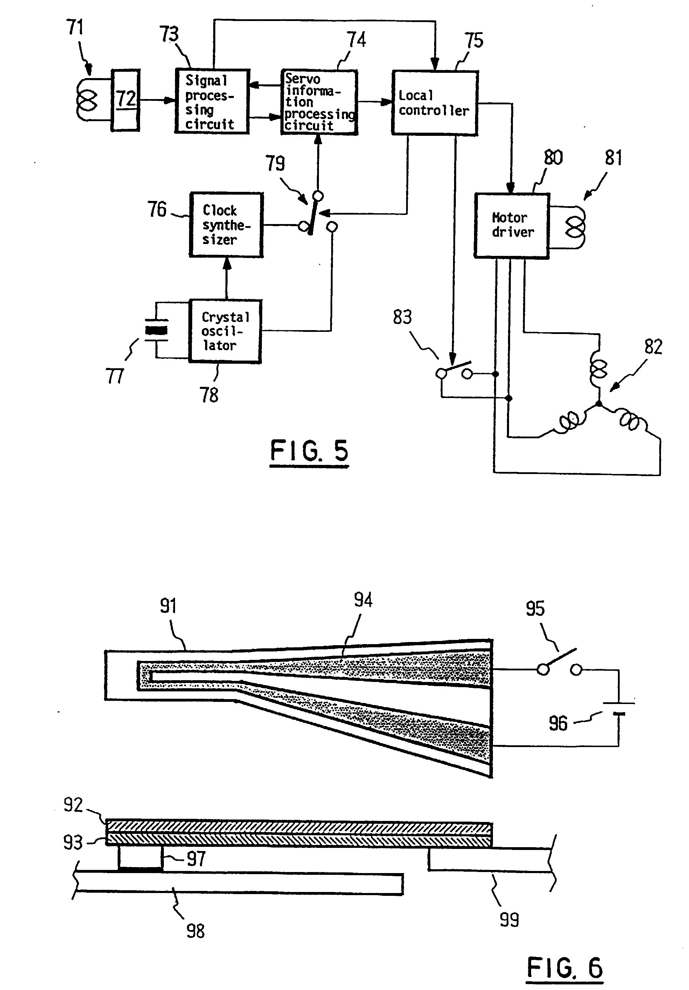

When an error caused by a thermal asperity is encountered, the spindle motor is braked in order to achieve a spin-down more quickly. Figure 5 shows a block diagram of the main components of a disk drive apparatus of this embodiment.

In Figure 5, a servo signal detected by a magnetic head 71 is amplified by a preamplifier 72, then a peak servo signal is detected and a pulse sequence is generated by a signal processing circuit 73. Based on this pulse sequence, a servo information processing circuit 74 detects a data identifier and generates a sample-and-hold timing. The clock used in this process is generated and supplied by a clock synthesizer 76 which generates any frequency or by a crystal oscillator 78 which generates a frequency specific to a crystal oscillator element 77. Which of the two is to be used is selected by the operation of a change-over switch 79, which is activated by a local controller 75. That is, the switching is made according to a disk rotation speed.

Based on the servo information obtained as described above, the local controller 75 controls, via a motor driver 80, a current flowing into a voice coil motor (VCM) 81 so as to control the position of the head. Speed reduction of a spindle motor which drives a disk is accomplished by short-circuiting a switch 83 inserted between different two phases of a motor 82 to apply a brake to the spindle motor. Thus, the speed reduction is accomplished in a short time.

When an error caused by a projection such as a thermal asperity is detected in the disk drive apparatus shown in Figure 5, the revolution speed of the spindle motor is reduced, for example, to a half of a normal speed. In order to reduce the speed quickly, the spindle motor is braked. The braking may be accomplished by applying short circuit between phases of the motor as described above or by exciting the motor to bring it to a phase opposite to a normal phase.

The servo clock supply source is switched from the crystal oscillator to the clock synthesizer, and the output frequency of the clock synthesizer is preset to a half of the frequency of a normal servo clock, that is, the servo clock based on the crystal oscillator. Thus, the servo data recorded on the disk, the rotation speed of which is reduced, can be read by using the signal transducer head.

Under the conditions allowing servo data on the disk to be read, the signal transducer head is positioned over a track on which an error occurs and moved forward and backward, for example +/- 50 tracks, from that track to make the ABS side of the signal transducer head scrub away a projection such as a thermal asperity. The servo data read from the disk during this operation enables the signal transducer head to be positioned accurately for scrubbing. After scrubbing for a predetermined period of time, a normal disk rotation speed is returned to a normal speed, the servo clock supply source is switched back to the crystal oscillator, and then a read/write operation is retried.

Because the signal transducer head performs the scrubbing operation while reading servo data, accurate control can be achieved. For example, it can be moved 50 tracks inward or outward from a track on which an error occurred. The movement of the signal transducer head may be controlled by specifying X tracks inward or outward as the target tracks, or by specifying the number of tracks to be skipped. The signal transducer head may be moved one track for one disk rotation or several tracks for one disk rotation.

Since a track on which an error occurred can cause additional errors, an alternative area on the disk may be used instead of the erroneous track by changing the address to ensure the reliability of subsequent data read/write operations.

Another embodiment of this invention is a configuration in which a bimetal and a heating element are attached to a head suspension which is a mounting structure of a signal transducer head. If the disk drive apparatus detects an error, it heats the heating element on the suspension while the element is in the proximity of a track on which the error occurred and the heat transforms the bimetal to force the signal transducer head to lower its flying height. While the flying height is being lowered, the head, i.e. the signal transducer head, traverses the disk to scrub away a projection such as a thermal asperity.

Figure 6 shows a configuration of a suspension having a bimetal structure. The suspension 91 fixed on a head arm 99 comprises of a bimetal structure, that is, a structure formed of a first material 92 with a higher linear thermal expansion coefficient, for example SUS 303, and a second material 93 with a lower linear thermal expansion coefficient, for example SUS 406, bonded together. A heating element 94 is formed on the material 93 of the suspension by printing a resistance element made of a material such as carbon. The heating can be controlled by a DC voltage source 96 and a switch 95. When the switch 95 is closed, electric current is conducted through the heating element and a difference between the linear coefficients of the two materials causes the suspension to transform. This transformation, in turn, moves the head 97 close to the disk 98, causing the flying height of the head to decrease.

In the suspension shown in Figure 6, when the heating element is heated while the signal transducer head is over the proximity of a track on which an error occurred, the bimetal bends in the direction of moving the signal transducer head close to the disk surface, and as a result, the flying height of the transducer head is lowered. While the flying height is lowered, scrubbing operation is performed over the track on which the error occurred and over its proximity to remove a projection such as a thermal asperity. After scrubbing, the signal transducer head returns to its normal flying height for data read/write operations by stopping the heating of the heating element, and the read/write operation is retried to ensure the removal of the projection.

The inventive disk drive apparatus and thermal asperity removal process make it possible to break projections which are the basic cause of read errors when data errors result from thermal asperities so as to allow the data to be read.

## Claims

1. A disk drive apparatus arranged to rotate disk signal storage media (18) and to read or write data on said disk by using a signal transducer head (20) arranged to fly over said disk, said disk drive apparatus comprising:
detection means for detecting a read error on a data recording surface of said disk (18) caused by a projection (52) on the surface;
characterised in that the apparatus includes
correction means for lowering the flying height of said signal transducer head (20) so as to make an assembly of said signal transducer head hit the projection (52) on said disk surface so as to break said projection, thereby facilitating recovery of the read error.

2. A disk drive apparatus as claimed in Claim 1, wherein said correction means comprises speed control means for changing the rotation speed of said disk (18) from the normal rotation speed for data read or write operations while said signal transducer head (20) is positioned in the proximity of a track where the error has been detected, the change in rotation speed causing the flying height of said signal transducer head (20) to be lowered so as to make the transducer head assembly hit the projection (52).

3. A disk drive apparatus as claimed in Claim 2, wherein said signal transducer head (20) is a positive-pressure signal transducer head which increases its flying height as disk rotation speed increases, and said speed control means is configured to reduce the disk rotation speed from said normal speed to lower the flying height of said signal transducer head so as to break said projection (52).

4. A disk drive apparatus as claimed in Claim 2, wherein said signal transducer head (20) is a negative-pressure signal transducer head which decreases its flying height as disk rotation speed increases, and said speed control means is configured to increase the disk rotation speed from said normal speed to lower the flying height of said signal transducer head so as to break said projection (52).

5. A disk drive apparatus as claimed in any of claims 1 to 4, further comprising supply means (76) for supplying a servo clock, said supply means being capable of supplying different frequency clocks, said disk drive apparatus being arranged to lower the flying height of said signal transducer head (20) by changing the rotation speed of said disk, to change a clock supplied by said supply means (76) in accordance with the change of the disk rotation speed, to read a servo signal recorded on said disk (18) by using said signal transducer head (20), and to control the position of said signal transducer head to make an assembly of said signal transducer head hit the projection (52) on said disk so as to break said projection.

6. A disk drive apparatus as claimed in Claim 1, wherein said correction means comprises:
a suspension means (91) for supporting said signal transducer head (20), said suspension means having a bimetal (92, 93) to be transformed when heated so that said signal transducer head may be brought closer to said disk, and a heating element (94) for heating said bimetal;
whereby, said bimetal (92, 93) is heated to lower the flying height of said signal transducer head (20) while said signal transducer head is positioned in the proximity of the track where the error has been detected, to make the transducer head assembly hit the projection (52) on said disk.

7. A disk drive apparatus as claimed in any preceding claim, wherein the read error is caused by the contact of said signal transducer head (20) with a projection (52) such as a thermal asperity on the data recording surface of said disk (18), and said projection to be broken by the strike of said signal transducer head is a thermal asperity.

8. A method of recovering read errors in a disk drive apparatus arranged to rotate disk signal storage media (18) and to read or write data on said disk by using a signal transducer head (20) arranged to fly over said disk, the method comprising the step:
detecting a read error on a data recording surface of said disk (18) caused by a projection (52) on the surface;
characterised in that the method also includes the step of
decreasing the flying height of said signal transducer head (20) so as to make an assembly of said signal transducer head hit the projection (52) on said disk surface so as to break said projection, thereby facilitating recovery of the read error.

9. A method as claimed in Claim 8, wherein said decreasing step comprises changing the rotation speed of said disk (18) from the normal rotation speed for data read or write operations while said signal transducer head (20) is positioned in the proximity of a track where the error has been detected, the change in rotation speed causing the flying height of said signal transducer head (20) to be decreased so as to make the transducer head assembly hit the projection (52).

10. A method as claimed in Claim 9, wherein said signal transducer head (20) is a positive-pressure signal transducer head which increases its flying height as disk rotation speed increases, and in said step of changing the rotation speed of said disk from said normal rotation speed, the rotation speed is reduced.

11. A method as claimed in Claim 9, wherein said signal transducer head (20) is a negative-pressure signal transducer head which decreases its flying height as disk rotation speed increases, and in said step of changing the rotation speed of said disk from said normal rotation speed, the rotation speed is increased.

12. A method as claimed in any of claims 9 to 11, further comprising the steps of:
employing a servo clock supply means to supply a frequency clock that is changed in accordance with the change of the disk rotation speed;
lowering the flying height of said signal transducer head (20) by changing the rotation speed of said disk;
reading a servo signal recorded on said disk by using said signal transducer head (20) in accordance with the clock provided by the servo clock supply means; and
controlling the position of said signal transducer head to make an assembly of said signal transducer head hit the projection (52) on said disk so as to break said projection.

13. A method as claimed in Claim 8, wherein said disk drive apparatus comprises a suspension means (91) for supporting said signal transducer head (20), said suspension means having a bimetal (92, 93) which transforms on heating to bring the signal transducer head (20) closer to the disk, and a heating element (94) for heating said bimetal, the method comprising heating said bimetal (92, 93) to lower the flying height of said signal transducer head (20) while said signal transducer head is positioned in the proximity of the track where the error has been detected, to make the transducer head assembly hit the projection (52) on said disk.

14. A method as claimed in any of claims 8 to 13, wherein the read error is caused by the contact of said signal transducer head (20) with a projection (52) such as a thermal asperity on the data recording surface of said disk (18), and said projection to be broken by the strike of said signal transducer head is a thermal asperity.

## Patentansprüche

1. Ein Plattenlaufwerk, das so aufgebaut ist, daß das plattenförmige Signalspeichermedium 18 rotiert und die Daten auf der Platte gelesen oder geschrieben werden, indem ein Schreib-/Lesekopf 20 über der Platte fliegt; und das
ein Erkennungsmittel zur Erkennung eines durch eine Oberflächenerhebung 52 verursachten Lesefehlers auf einer Datenaufzeichnungsoberfläche der Platte 18 besitzt; und das dadurch gekennzeichnet ist, daß es
ein Korrekturmittel besitzt, um die Flughöhe des Schreib-/Lesekopfes 20 zu verringern, damit ein Teil des Schreib-/Lesekopfes auf die Erhebung 52 auf der Plattenoberfläche auftrifft, um diese Erhebung abzutragen und so zur Fehlerbehebung beizutragen.

2. Ein Plattenlaufwerk gemäß Anspruch 1, bei dem das Korrekturmittel ein Drehzahlsteuerungsmittel besitzt, um die Drehgeschwindigkeit der Platte 18 bei Lese- oder Schreiboperationen gegenüber ihrer normalen Drehgeschwindigkeit zu verringern, während der Schreib-/Lesekopf 20 über der Umgebung einer Spur steht, auf der der Fehler erkannt wurde, wobei die Änderung der Drehgeschwindigkeit bewirkt, daß die Flughöhe des Schreib-/Lesekopfs 20 geringer wird, so daß der Schreib-/Lesekopf auf die Erhebung 52 auftrifft.

3. Ein Plattenlaufwerk gemäß Anspruch 2, bei dem der Schreib/Lesekopf 20 ein Schreib-/Lesekopf mit positivem Druck ist, bei dem die Flughöhe mit zunehmender Plattendrehzahl zunimmt, und das Drehzahlsteuerungsmittel so konfiguriert ist, daß die Drehzahl der Platte gegenüber der normalen Drehzahl verringert wird, um die Flughöhe des Schreib/Lesekopfes zu verringern, so daß die Erhebung 52 abgetragen wird.

4. Ein Plattenlaufwerk gemäß Anspruch 2, bei dem der Schreib/Lesekopf 20 ein Schreib-/Lesekopf mit negativem Druck ist, bei dem die Flughöhe mit zunehmender Plattendrehzahl abnimmt, und das Drehzahlsteuerungsmittel so konfiguriert ist, daß die Drehzahl der Platte gegenüber der normalen Drehzahl erhöht wird, um die Flughöhe des Schreib-/Lesekopfes zu verringern, so daß die Erhebung 52 abgetragen wird.

5. Ein Plattenlaufwerk gemäß Anspruch 1 bis 4, das außerdem ein Takterzeugungsmittel 76 zur Erzeugung eines Servotaktes besitzt, welches verschiedene Taktfrequenzen liefern kann, wobei das Plattenlaufwerk so aufgebaut ist, daß die Flughöhe des Schreib-/Lesekopfes 20 durch Änderung der Drehzahl der Platte verändert wird, um eine vom Takterzeugungsmittel 76 gelieferte Taktfrequenz in Abhängigkeit von der Plattendrehzahl zu ändern, um ein auf der Platte 18 aufgezeichnetes Servosignal mit Hilfe des Schreib-/Lesekopfes 20 zu lesen, und um die Position des Schreib-/Lesekopfes so zu steuern, daß ein Teil des Schreib-/Lesekopfes auf die Erhebung 52 auf der Platte auftrifft, um die Erhebung abzutragen.

6. Ein Plattenlaufwerk gemäß Anspruch 1, bei dem das Korrekturmittel Folgendes enthält:
ein Aufhängungsmittel 91 als Träger des Schreib-/Lesekopfes 20, das ein Bimetallelement 92, 93, das sich bei Erwärmung verbiegt, so daß der Schreib-/Lesekopf näher an die Platte gebracht werden kann, sowie ein Heizelement 94 für das Bimetallelement besitzt;
wodurch das Bimetallelement 92, 93 erwärmt wird, um die Flughöhe des Schreib-/Lesekopfes 20 zu verringern, während dieser sich in der Nähe der Spur befindet, auf der der Fehler festgestellt wurde, damit der Schreib-/Lesekopf auf die Erhebung 52 auf der Platte auftrifft.

7. Ein Plattenlaufwerk gemäß Anspruch 1 bis 6, bei dem der Lesefehler durch den Kontakt des Schreib-/Lesekopfes 20 mit einer Erhebung 52 wie z.B. einer thermischen Unebenheit auf der Datenaufzeichnungsoberfläche der Platte 18 verursacht wird und die durch das Auftreffen des Schreib/Lesekopfes abzutragende Erhebung eine thermische Unebenheit ist.

8. Ein Verfahren zur Behebung von Fehlern in einem Plattenlaufwerk, das so aufgebaut ist, daß ein plattenförmiges Signalaufzeichnungsmedium 18 rotiert und Daten auf der Platte mittels eines über die Platte fliegenden Schreib/Lesekopfes gelesen oder geschrieben werden, wobei das Verfahren einen Schritt enthält, in dem
ein durch eine Oberflächenerhebung 52 verursachter Lesefehler auf der Datenaufzeichnungsoberfläche der Platte 18 erkannt wird, und dadurch gekennzeichnet ist, daß es außerdem einen Schritt enthält, in dem
die Flughöhe des Schreib-/Lesekopfes 20 verringert wird, so daß ein Teil des Schreib-/Lesekopfes auf die Erhebung 52 auf der Plattenoberfläche auftrifft, um die Erhebung abzutragen, und so zur Fehlerbehebung beizutragen.

9. Ein Verfahren gemäß Anspruch 8, bei dem der Absenkungsschritt darin besteht, daß die Drehzahl der Platte 18 gegenüber der normalen Drehzahl für Lese- oder Schreiboperationen verändert wird, während der Schreib-/Lesekopf 20 sich in der Nähe einer Spur befindet, auf der der Fehler erkannt worden ist, wobei die Drehzahländerung bewirkt, daß die Flughöhe des Schreib-/Lesekopfes 20 verringert wird, so daß dieser auf die Erhebung 52 auftrifft.

10. Ein Verfahren gemäß Anspruch 9, bei dem der Schreib-/Lesekopf 20 ein Schreib-/Lesekopf mit positivem Druck ist, bei dem die Flughöhe mit zunehmender Plattendrehzahl zunimmt, und in dem Schritt, in dem die Drehzahl der Platte gegenüber der normalen Drehzahl verändert wird, die Drehzahl verringert wird.

11. Ein Verfahren gemäß Anspruch 9, bei dem der Schreib-/Lesekopf 20 ein Schreib-/Lesekopf mit negativem Druck ist, bei dem die Flughöhe mit zunehmender Plattendrehzahl abnimmt, und in dem Schritt, in dem die Drehzahl der Platte gegenüber der normalen Drehzahl verändert wird, die Drehzahl erhöht wird.

12. Ein Verfahren gemäß Anspruch 9 bis 11, das außerdem folgende Schritte umfaßt:
Verwendung eines Servotakterzeugungsmittels zur Erzeugung eines Taktes, der in Abhängigkeit von der Plattendrehzahl geändert wird;
Verringern der Flughöhe des Schreib-/Lesekopfes 20 durch Änderung der Plattendrehzahl;
Lesen eines auf der Platte aufgezeichneten Servosignals mittels des Schreib-/Lesekopfes 20 nach dem vom Servotakterzeugungsmittel erzeugten Takt; und
Steuern der Position des Schreib-/Lesekopfes, damit ein Teil des Schreib-/Lesekopfes auf die Erhebung 52 auf der Platte auftrifft, um diese abzutragen.

13. Ein Verfahren gemäß Anspruch 8, bei dem das Plattenlaufwerk ein Aufhängungsmittel 91 als Träger des Schreib/Lesekopfes 20, das ein Bimetallelement 92, 93, das sich bei Erwärmung verbiegt, so daß der Schreib-/Lesekopf näher an die Platte gebracht werden kann, sowie ein Heizelement 94 für das Bimetallelement besitzt; wobei das Verfahren einen Schritt enthält, in dem das Bimetallelement 92, 93 erwärmt wird, um die Flughöhe des Schreib-/Lesekopfes 20 zu verringern, während dieser sich in der Nähe der Spur befindet, auf der der Fehler festgestellt wurde, damit der Schreib-/Lesekopf auf die Erhebung 52 auf der Platte auftrifft.

14. Ein Verfahren gemäß Anspruch 8 bis 13, bei dem der Lesefehler durch den Kontakt des Schreib-/Lesekopfes 20 mit einer Erhebung 52 wie z.B. einer thermischen Unebenheit auf der Datenaufzeichnungsoberfläche der Platte 18 verursacht wird und die durch das Auftreffen des Schreib-/Lesekopfes abzutragende Erhebung eine thermische Unebenheit ist.

## Revendications

1. Unité de disque conçue pour faire tourner des supports de stockage de signaux de disque (18) pour lire ou écrire des données sur le disque en utilisant une tête de transduction de signal (20) disposée pour voler au-dessus dudit disque, ladite unité de disque comprenant :
un moyen de détection pour détecter une erreur de lecture sur une surface d'enregistrement de données dudit disque (18) provoquée par une saillie (52) sur la surface ; et caractérisée en ce que l'unité inclut
un moyen de correction pour abaisser la hauteur de vol de ladite tête de transduction de signal (20) de façon à amener un ensemble de ladite tête de transduction de signal à heurter la saillie (52) sur ladite surface du disque de façon à rompre ladite saillie, facilitant de ce fait la récupération de l'erreur lue.

2. Unité de disque selon la revendication 1, dans laquelle ledit moyen de correction comprend un moyen de commande de vitesse pour changer la vitesse de rotation dudit disque (18) à partir de la vitesse de rotation normale pour les opérations de lecture ou d'écriture de données alors que ladite tête de transduction de signal (20) est positionnée à proximité d'une piste où l'erreur a été détectée, le changement de la vitesse de rotation entraînant la hauteur de vol de ladite tête de transduction de signal (20) à être abaissée de façon à faire que ledit ensemble de tête de transduction heurte la saillie (52).

3. Unité de disque selon la revendication 2, dans laquelle ladite tête de transduction de signal (20) est une tête de transduction de signal à pression positive qui accroît sa hauteur de vol à mesure que la vitesse de rotation du disque augmente et ledit moyen de commande de vitesse est configuré pour réduire la vitesse de rotation du disque à partir de la vitesse normale pour abaisser la hauteur de vol de ladite tête de transduction de signal de façon à rompre ladite saillie (52).

4. Unité de disque selon la revendication 2, dans laquelle ladite tête de transduction de signal (20) est une tête de transduction de signal à pression négative qui diminue sa hauteur de vol à mesure que la vitesse de rotation du disque augmente, et ledit moyen de commande de vitesse est configuré de manière à accroître la vitesse de rotation du disque à partir de la vitesse normale pour abaisser la hauteur de vol de ladite tête de transduction de signal de façon à rompre ladite saillie (52).

5. Unité de disque selon l'une quelconque des revendications 1 à 4, comprenant de plus un moyen d'alimentation (76) pour délivrer une horloge d'asservissement, ledit moyen d'alimentation étant capable de délivrer des horloges à des fréquences différentes, ladite unité de disque étant conçue pour abaisser la hauteur de vol de ladite tête de transduction de signal (20) en changeant la vitesse de rotation dudit disque, pour changer une horloge délivrée par ledit moyen d'alimentation (76) en conformité avec le changement de la vitesse de rotation du disque, pour lire un signal d'asservissement enregistré sur ledit disque (18) en utilisant ladite tête de transduction de signal (20) et pour commander la position de ladite tête de transduction de signal pour faire qu'un ensemble de ladite tête de transduction de signal heurte la saillie (52) sur ledit disque de façon à rompre ladite saillie.

6. Unité de disque selon la revendication 1, dans laquelle ledit moyen de correction comprend :
un moyen de suspension (91) pour supporter ladite tête de transduction de signal (20), ledit moyen de suspension ayant un élément bilame (92, 93) qui sera transformé lorsque chauffé de sorte que ladite tête de transduction de signal peut être amenée plus proche dudit disque et un élément de chauffage (94) pour chauffer ledit bilame ;
d'où il résulte que ledit bilame (92, 93) est chauffé pour abaisser la hauteur de vol de ladite tête de transduction de signal (20) alors que ladite tête de transduction de signal est positionnée à proximité de la piste où l'erreur a été détectée, pour amener l'ensemble de tête de transduction à heurter la saillie (52) sur ledit disque.

7. Unité de disque selon l'une quelconque des revendications, dans laquelle l'erreur de lecture est provoquée par le contact de ladite tête de transduction de signal (20) avec une saillie (52) telle qu'une aspérité thermique sur la surface d'enregistrement de données dudit disque (18) et ladite saillie qui doit être rompue par le heurt de ladite tête de transduction de signal est une aspérité thermique.

8. Procédé pour récupérer des erreurs de lecture dans une unité de disque conçue pour faire tourner des supports de mémorisation de signaux de disque (18) pour lire ou écrire des données sur ledit disque en utilisant une tête de transduction de signal (20) conçue pour voler sur ledit disque, le procédé comprenant l'étape consistant à :
détecter une erreur de lecture sur une surface d'enregistrement de données dudit disque (18) provoquée par une saillie (52) sur la surface ; caractérisé en ce que le procédé comprend également l'étape consistant à :
abaisser la hauteur de vol de ladite tête de transduction de signal (20) de façon à faire qu'un ensemble de ladite tête de transduction de signal heurte la saillie (52) sur ladite surface du disque de façon à rompre ladite saillie, facilitant de ce fait la récupération de l'erreur de lecture.

9. Procédé selon la revendication 8, dans lequel ladite étape d'abaissement comprend le changement de la vitesse de rotation du disque (18) à partir de la vitesse de rotation normale pour les opérations de lecture ou d'écriture de données alors que ladite tête de transduction de signal (20) est positionnée à proximité dudit disque où l'erreur a été détectée, le changement de la vitesse de rotation amenant la hauteur de vol de ladite tête de transduction de signal (20) à être diminuée de façon à faire que l'ensemble de tête de transduction heurte la saillie (52).

10. Procédé selon la revendication 9, dans lequel ladite tête de transduction de signal (20) est une tête de transduction de signal à pression positive qui augmente sa hauteur de vol à mesure que la vitesse de rotation du disque augmente, et dans ladite étape de changement de la vitesse de rotation dudit disque à partir de ladite vitesse de rotation normale, la vitesse de rotation est réduite.

11. Procédé selon la revendication 9, dans lequel ladite tête de transduction de signal (20) est une tête de transduction de signal à pression négative qui diminue sa hauteur de vol à mesure que la vitesse de rotation du disque augmente, et dans ladite étape de changement de la vitesse de rotation dudit disque à partir de ladite vitesse de rotation normale, la vitesse de rotation est accrue.

12. Procédé selon l'une quelconque des revendications 9 à 11, comprenant de plus les étapes consistant à :
employer un moyen d'alimentation d'horloge d'asservissement pour délivrer une fréquence d'horloge qui est modifiée en conformité avec le changement de la vitesse de rotation du disque ;
abaisser la hauteur de vol de ladite tête de transduction de signal (20) en changeant la vitesse de rotation dudit disque ;
lire un signal d'asservissement enregistré sur ledit disque en utilisant ladite tête de transduction de signal (20) en conformité avec l'horloge délivrée par le moyen d'alimentation d'horloge d'asservissement ; et
commander la position de ladite tête de transduction de signal pour faire qu'un ensemble de ladite tête de transduction de signal heurte la saillie (52) sur ledit disque de façon à rompre ladite saillie.

13. Procédé selon la revendication 8, dans lequel ladite unité de disque comprend un moyen de suspension (91) pour supporter ladite tête de transduction de signal (20), ledit moyen de suspension ayant un bilame (92, 93) qui se transforme lorsque chauffé pour amener la tête de transduction de signal (20) plus près du disque et un élément chauffant (94) pour chauffer ledit bilame, ledit procédé comprenant le chauffage dudit bilame (92, 93) pour abaisser la hauteur de vol de ladite tête de transduction de signal (20) alors que ladite tête de transduction de signal est positionnée à proximité de la piste où l'erreur a été détectée, pour amener l'ensemble de tête de transduction à heurter la saillie (52) sur ledit disque.

14. Procédé selon l'une quelconque des revendications 8 à 13, dans lequel l'erreur de lecture est provoquée par le contact de ladite tête de transduction de signal (20) avec une saillie (52) telle qu'une aspérité thermique sur la surface d'enregistrement de données du disque (18) et ladite saillie qui doit être rompue par le heurt de ladite tête de transduction de signal est une aspérité thermique.
